(19) **Europäisches Patentamt / European Patent Office / Office européen des brevets**

(11) **EP 4 549 380 B1**

(12) # EUROPEAN PATENT SPECIFICATION

(45) Date of publication and mention
of the grant of the patent:
**20.05.2026 Bulletin 2026/21**

(21) Application number: **23831374.6**

(22) Date of filing: **26.06.2023**

(51) International Patent Classification (IPC):
*C01B 32/00* (2017.01)  *C01B 32/05* (2017.01)
*C01B 32/20* (2017.01)  *H01M 4/133* (2010.01)
*H01M 4/36* (2006.01)  *H01M 10/0525* (2010.01)
*H01M 4/587* (2010.01)

(52) Cooperative Patent Classification (CPC):
**H01M 4/587; C01B 32/00; C01B 32/05;**
**C01B 32/20; H01M 4/133; H01M 4/364;**
H01M 10/0525; Y02E 60/10

(86) International application number:
**PCT/JP2023/023563**

(87) International publication number:
**WO 2024/004934 (04.01.2024 Gazette 2024/01)**

---

(54) **HARDLY GRAPHITIZABLE CARBON, MIXED CARBON POWDER, NEGATIVE ELECTRODE FOR LITHIUM ION SECONDARY BATTERIES, AND LITHIUM ION SECONDARY BATTERY**

SCHWER GRAPHITISIERBARER KOHLENSTOFF, GEMISCHTES KOHLENSTOFFPULVER, NEGATIVELEKTRODE FÜR LITHIUM-IONEN-SEKUNDÄRBATTERIEN UND LITHIUM-IONEN-SEKUNDÄRBATTERIE

CARBONE FAIBLEMENT GRAPHITISABLE, POUDRE DE CARBONE MIXTE, ÉLECTRODE NÉGATIVE POUR BATTERIE SECONDAIRE AU LITHIUM-ION, ET BATTERIE SECONDAIRE AU LITHIUM-ION

---

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.06.2022 JP 2022104535**

(43) Date of publication of application:
**07.05.2025 Bulletin 2025/19**

(73) Proprietors:
• **JFE Chemical Corporation**
  **Tokyo 111-0051 (JP)**
• **JFE Steel Corporation**
  **Tokyo 100-0011 (JP)**

(72) Inventors:
• **OKUMURA Yusuke**
  **Tokyo 100-0011 (JP)**
• **SUTO Mikito**
  **Tokyo 100-0011 (JP)**

• **KOBAYASHI Hikaru**
  **Tokyo 100-0011 (JP)**
• **FUSHIWAKI Yusuke**
  **Tokyo 100-0011 (JP)**
• **FURUYA Atomu**
  **Tokyo 111-0051 (JP)**
• **HAGA Ryuta**
  **Tokyo 111-0051 (JP)**

(74) Representative: **Grünecker Patent- und Rechtsanwälte**
**PartG mbB**
**Leopoldstraße 4**
**80802 München (DE)**

(56) References cited:
**EP-A1- 2 808 300**    **WO-A1-2013/111595**
**JP-A- 2020 189 778**    **JP-A- 2020 189 778**
**US-A1- 2014 080 004**

---

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 549 380 B1

# EP 4 549 380 B1

**Description**

The present invention relates to non-graphitizable carbon, a mixed carbon powder, a negative electrode for a lithium-ion secondary battery, and a lithium-ion secondary battery.

BACKGROUND ART

These days, with increasing global awareness of global environmental protection, reductions in use of fossil fuels and reductions in $CO_2$ emissions are required, and as a means thereof, power generation using renewable energy is becoming widespread. On the other hand, the output of power generation using renewable energy represented by solar power generation, wind power generation, or the like is likely to fluctuate depending on the time zone, weather conditions, season, etc. Thus, stabilization of power supply is attempted by combining a power storage system (energy storage system, hereinafter also referred to as ESS) for leveling output fluctuation and power generation using renewable energy.

Examples of means for power storage used for the power storage system include a secondary battery. The secondary battery used for the power storage system needs to have large capacity; thus, a lithium-ion secondary battery (LIB), which has a high energy density per volume and mass and can be downsized, has attracted attention. At present, carbon materials are commonly used as negative electrode materials of the lithium-ion secondary battery. As negative electrode materials other than carbon, metals such as Si, Sn, Ti and V, metal oxides containing the above metals and lithium, hybrid materials of carbon and the above metals, and the like are supposedly in the research stage.

Among carbon materials, graphite-based materials, when used as negative electrode materials, provide lithium-ion secondary batteries having high discharge capacity, and thus have been widely used for lithium-ion secondary batteries for mobile electronic devices, and the like. On the other hand, for ESS use, non-graphitizable carbon materials having high discharge capacity and good cycle characteristics are suitable. In particular, unlike hybrid vehicle secondary batteries or the like, ESS use strongly requires a charge capacity that enables large-capacity charge at a low charge rate, a high volume capacity for downsizing, and life characteristics that allow long-term repeated charge and discharge.

Structural features of the non-graphitizable carbon used for a negative electrode material of the lithium-ion secondary battery include the fact that graphite units having small crystallite sizes are crystallized in a non-oriented manner, the fact that pores are present between graphite units, and the fact that the interlayer distance (c-axis length) in the stacking direction of graphene in the graphite unit is long. From these structural features, the non-graphitizable carbon can occlude Li not only between graphene layers but also in pores, and thus it is known that the non-graphitizable carbon has a charge/discharge capacity higher than the theoretical capacity of graphite (pure graphite), 372 mAh/g. Further, since the c-axis length is long, the non-graphitizable carbon experiences a small volume change upon extraction or insertion of Li, and is excellent in life characteristics (cycle characteristics).

For non-graphitizable carbon, for example, Patent Literature 1 discloses that a carbon material having a large amount of lithium occlusion is obtained by a method in which an index that the crystallite size in the c-axis direction and the lattice plane distance corresponding to 002 reflection determined from X-ray diffraction relate to is set to a value in a specific range.

Further, Patent Literature 2 discloses a nonaqueous electrolyte secondary battery using a carbon material in which the crystallite size in the c-axis direction, the lattice plane distance corresponding to 002 reflection, and the crystallite size in the a-axis direction determined from X-ray diffraction are in respective predetermined ranges.

Patent Literature 3 and 4 both disclose hardly graphitizable carbon material suitable to be used in a negative electrode of a lithium ion secondary battery having a d002 interplanar lattice distance of 0.365 nm or more.

CITATION LIST

PATENT LITERATURE

Patent Literature 1: JP H08-180868 A
Patent Literature 2: JP H10-21915 A
Patent Literature 3 and 4: EP 2 808 300 A1, US 2014/080004 A1

SUMMARY OF INVENTION

TECHNICAL PROBLEMS

On the other hand, conventionally, the crystallite size of a carbon material has been determined by the Scherrer equation and the "Gakushin" method, or the like, that is, determined from only the half-width of a diffraction peak in an X-ray diffraction pattern, and has not taken account of the spread of the half-width due to strain of the carbon material.

The present inventors conducted studies on a structure and a production method of non-graphitizable carbon with which high discharge capacity is obtained. As a result, the present inventors have found that a measure of controlling a crystallite size obtained by the conventional method to a value in a specific range alone has difficulty in obtaining sufficient discharge capacity, and have recognized that some improvement is necessary.

The present invention has been made in view of the above points, and an object of the present invention is to provide non-graphitizable carbon, a mixed carbon powder, a negative electrode for a lithium-ion secondary battery, and a lithium-ion secondary battery with which high discharge capacity is obtained.

SOLUTION TO PROBLEMS

The present inventors conducted intensive studies to solve the above issue, and have found that the above issue is achieved when the strain of a carbon material as determined through information of strain of the carbon material obtained by the Williamson-Hall method is in a predetermined range and a lattice plane distance corresponding to 002 reflection is in a predetermined range; thus, have completed the present invention. That is, the present inventors have found that the above issue is solved by the following configuration.

[1] Non-graphitizable carbon

wherein a strain $\varepsilon$ determined by a method in which an X-ray diffraction pattern is subjected to Rietveld analysis to obtain a profile and the profile is used to determine a strain $\varepsilon$ by a Williamson-Hall method is 0.081 to 0.120, and a lattice plane distance $d_{002}$ corresponding to 002 reflection as obtained by subjecting the X-ray diffraction pattern to Rietveld analysis is 0.360 to 0.370 nm.

[2] A negative electrode for a lithium-ion secondary battery, the negative electrode comprising the non-graphitizable carbon according to [1].

[3] A lithium-ion secondary battery comprising the negative electrode for a lithium-ion secondary battery according to [2].

[4] A mixed carbon powder comprising the non-graphitizable carbon according to [1] and graphite,

wherein a content amount of the non-graphitizable carbon is 1 to 20 mass% with respect to a total mass of the mixed carbon powder, and
a balance is the graphite.

[5] A negative electrode for a lithium-ion secondary battery, the negative electrode comprising the mixed carbon powder according to [4].

[6] A lithium-ion secondary battery comprising the negative electrode for a lithium-ion secondary battery according to [5].

ADVANTAGEOUS EFFECTS OF INVENTION

According to the present invention, non-graphitizable carbon, a negative electrode for a lithium-ion secondary battery, and a lithium-ion secondary battery with which high discharge capacity is obtained can be provided.

BRIEF DESCRIPTION OF DRAWINGS

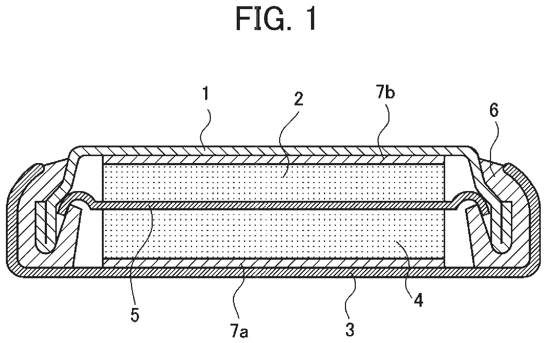

[FIG. 1] FIG. 1 is a cross-sectional view showing a coin-type secondary battery for evaluation.

DESCRIPTION OF EMBODIMENTS

Hereinbelow, the present invention is described in detail.

The descriptions of the components described below may be made based on representative embodiments of the present invention, but the present invention is not limited to such embodiments.

Hereinbelow, the meanings of descriptions in the present specification are shown.

Embodiments of the present invention will now be described in detail. However, the embodiments described below are only examples, and the present invention is not limited to the embodiments described below.

In the present specification, a numerical value range shown using "to" means a range that includes the numerical values written before and after "to" as a lower limit value and an upper limit value.

[Non-graphitizable carbon]

In non-graphitizable carbon of the present invention, a strain ε determined by a method in which an X-ray diffraction pattern is subjected to Rietveld analysis to obtain a profile and the profile is used to determine a strain ε by the Williamson-Hall method is 0.081 to 0.120, and a lattice plane distance d002 corresponding to 002 reflection as obtained by subjecting the X-ray diffraction pattern to Rietveld analysis is 0.360 to 0.370 nm.

Detailed conditions for the Rietveld analysis and the Williamson-Hall method are described in detail later.

The mechanism by which high discharge capacity is obtained by controlling the strain ε is not necessarily clear, but the present inventors presume as follows. That is, it is presumed that, when the strain ε is 0.081 or more, it indicates that defects such as vacancies are introduced in the layer structure, Li is occluded in the defects such as vacancies, and high discharge capacity is obtained. On the other hand, when the strain ε is more than 0.120, the amount of defects such as vacancies is increased, the true density of the non-graphitizable carbon is reduced, and the discharge capacity per volume is reduced; thus, the strain ε is set to 0.120 or less.

The method for controlling the strain ε is not particularly limited; for example, the strain ε can be controlled to a value in a predetermined range by performing infusibility impartment described later by a multistage treatment to equalize the degree of oxidation of the interior of the particle. Further, the lower the temperature at which the source material of the non-graphitizable carbon is fired is and the larger the particle size of the non-graphitizable carbon is, the larger the strain ε introduced by baking tends to be.

In the non-graphitizable carbon of the present invention, as described above, a lattice plane distance d002 corresponding to 002 reflection as obtained by Rietveld analysis (hereinafter, also referred to as simply "lattice plane distance d002") is 0.360 nm or more and 0.370 nm or less.

The mechanism by which high discharge capacity is obtained by controlling the lattice plane distance d002 is not necessarily clear, but the present inventors presume as follows. That is, it is presumed that, when the lattice plane distance d002 is 0.360 nm or more, the Li extraction/insertion port is large and Li can be easily extracted and inserted, many of the interlayer Li occlusion sites can be effectively utilized, and high discharge capacity is obtained. Further, when the graphene interlayer distance repeats change in association with extraction and insertion of Li, the crystal structure is less likely to collapse; thus, good cycle characteristics can be obtained. The lattice plane distance d002 is preferably 0.361 nm or more. On the other hand, when the lattice plane distance d002 is more than 0.370 nm, the true density of the non-graphitizable carbon is reduced, and the discharge capacity per volume is reduced; thus, the lattice plane distance d002 is set to 0.370 nm or less. The lattice plane distance d002 is preferably 0.366 nm or less.

The method for controlling the lattice plane distance d002 is not particularly limited; for example, a material by the baking of which the lattice plane distance d002 is brought into the range of the present invention can be selected as a source material of the non-graphitizable carbon. For example, the source material may be selected from some types of pitch such as coal-based pitch and petroleum-based pitch, resins such as phenol resin and furan resin, mixtures of pitch and resin, and the like, and in particular, coal-based pitch is preferable in that the lattice plane distance d002 is likely to fall within a predetermined range.

The specific surface area (BET specific surface area) of the non-graphitizable carbon of the present invention measured using nitrogen gas by the BET method is preferably 10 $m^2/g$ or less and more preferably 1 to 6 $m^2/g$ in terms of suppressing reaction with the electrolytic solution.

The average particle size of the non-graphitizable carbon of the present invention is preferably 1 to 50 μm and more preferably 20 to 35 μm.

The average particle size is a particle size ($D_{50}$) at which the cumulative frequency in a laser diffraction particle size distribution meter is 50% in volume percentage.

The true density of the non-graphitizable carbon of the present invention is preferably 1.45 $g/cm^3$ or more, more preferably 1.47 $g/cm^3$ or more, and still more preferably 1.49 $g/cm^3$ or more. The true density is determined by a liquid phase substitution method with a pycnometer using butanol according to a method described in JIS R 7222.

In the non-graphitizable carbon of the present invention, assuming that the shape of the non-graphitizable carbon is a dense true sphere, the ratio of the BET specific surface area to the specific surface area calculated from the average particle size and the true density is preferably 30.0 or less, more preferably 10.0 or less, and still more preferably 5.0 or less. When the ratio is in a preferred range, the surface unevenness of the non-graphitizable carbon is reduced, and reaction with the electrolytic solution can be suppressed.

[Rietveld analysis]

In the present invention, the Rietveld analysis is performed by the following procedure.

First, X-ray diffraction measurement of the non-graphitizable carbon is performed to obtain an X-ray diffraction pattern of the non-graphitizable carbon. In the X-ray diffraction measurement, an X-ray diffraction pattern is obtained with the X-ray: a CuK$\alpha$ ray, the scan range (2$\theta$): 3 to 90°, and the step: 0.02°. The scan rate is adjusted so that the peak intensity of 002 reflection falls between 1000 to 3000 counts.

As the X-ray diffraction measuring apparatus, Ultima IV manufactured by Rigaku Corporation is used, and a monochromator is not used. As a sample for measuring the non-graphitizable carbon, a powder obtained by mixing the non-graphitizable carbon with $CeO_2$ (cerium dioxide, manufactured by NIST) as an internal standard in a mortar such that the amount of $CeO_2$ is 5 mass% of the total mass is loaded into a cell.

Next, the obtained X-ray diffraction pattern is subjected to Rietveld analysis under the following conditions. The Rietveld analysis was performed with reference to Izumi Nakai and Fujio Izumi as editors, "Funmatsu X-sen Kaiseki no Jissai (dai 2 ban)" ("Practice of Powder X-ray Analysis (second edition) "), Asakura Publishing Co., Ltd. (2009). The analysis is performed on peaks corresponding to the wavelengths of CuK$\alpha_1$ (0.1540593 nm) and CuK$\alpha_2$ (0.1544427 nm).

First, atomic displacement parameters and preferred-orientation parameters are calculated. The conditions are set as follows.

· Initial structure: Non-graphitizable carbon: ICSD No. 76767 (P63/mmc); Internal standard $CeO_2$ (NIST): ICSD No. 24887
· Analysis software: RIETAN-FP (ver. 2.32)
Profile function: Non-relaxation reflection: Toraya's split pseudo-Voigt function; Relaxation reflection: the extended split pseudo-Voigt function
· Rietveld analysis angle: 2$\theta$: 3 to 90°

Here, the following parameters are optimized under the following conditions.

1. Background parameters (8 parameters)
2. Scale factor (1 factor) $\times$ 2 phases
3. Profile function: Non-relaxation reflection: Toraya's split pseudo-Voigt function; Relaxation reflection: the extended split pseudo-Voigt function; Profile parameters (11 parameters) $\times$ 2 phases
4. Lattice constant of the non-graphitizable carbon: the a-axis and the c-axis (2 constants); Lattice constant of the internal standard $CeO_2$: the a-axis (1 constant)
5. Atomic displacement parameter: Non-graphitizable carbon: the 2b site and the 2c site (2 parameters); Internal standard $CeO_2$: the 4a site and the 8c site (2 parameters)
6. Preferred-orientation parameter: Non-graphitizable carbon: (001), (100), and (101) (3 parameters); The preferred-orientation of $CeO_2$ is not taken into account.

Analysis is repeated while the initial values of the parameters are adjusted until the analysis converges, namely Rwp (a weighted reliability factor) becomes 7 or less and S (a goodness-of-fit indicator) becomes 2 or less. The obtained atomic displacement parameters and preferred-orientation parameters are used for subsequent analysis.

Next, lattice constants (the a-axis and the c-axis) of the non-graphitizable carbon are calculated.

· Initial structure: a structure optimized by the above
· Profile function: the Thompson-Cox-Hastings (TCH) pseudo-Voigt function
· Rietveld analysis angle: 2$\theta$: 3 to 90°

Here, the following parameters are optimized.

1. Background parameters (8 parameters)
2. Scale factor (1 factor) $\times$ 2 phases
3. Profile function: the Thompson-Cox-Hastings (TCH) pseudo-Voigt function; Profile parameters (7 parameters)
4. Lattice constant of the non-graphitizable carbon: the a-axis and the c-axis (2 constants); Lattice constant of the internal standard $CeO_2$: the a-axis (1 constant)

Analysis is repeated while the initial values of the parameters are adjusted until the analysis converges, namely Rwp becomes 7 or less and S becomes 2 or less. A value obtained by dividing the obtained lattice constant of the c-axis by 2 is taken as the lattice plane distance d002.

[Williamson-Hall method]

In the present invention, analysis by the Williamson-Hall method is performed by the following procedure.

For peaks corresponding to the wavelengths of CuK$\alpha_1$ and CuK$\alpha_2$ of a profile of an X-ray diffraction pattern obtained by Rietveld analysis, the half-widths β [rad] at the respective diffraction angles θ [rad] are used to determine the crystallite size D and the strain ε according to the following formula. Note that λ is the wavelength of the X-ray; the wavelength of CuK$\alpha_1$ is 0.1540593 nm, and the wavelength of CuK$\alpha_2$ is 0.1544427 nm.

$$\beta\cos\theta/\lambda = 2\varepsilon\sin\theta/\lambda + 1/D$$

Here, plotting is performed with βcosθ/λ on the vertical axis and 2sinθ/λ on the horizontal axis; the strain ε can be determined from a slope determined by fitting by the least squares method. The above plot is also referred to as a Williamson-Hall plot.

The non-graphitizable carbon of the present invention can be suitably used as a negative electrode active material of a negative electrode for a lithium-ion secondary battery in that high discharge capacity is obtained. The negative electrode for a lithium-ion secondary battery using the non-graphitizable carbon of the present invention can include, in addition to the non-graphitizable carbon of the present invention, components and members usually used for negative electrodes for lithium-ion secondary batteries.

[Method for producing the non-graphitizable carbon]

Examples of the production method for obtaining the non-graphitizable carbon of the present invention will now be described. The production method for obtaining the non-graphitizable carbon of the present invention is not limited to the following examples.

Examples of the method for producing the non-graphitizable carbon include a method in which a source material of the non-graphitizable carbon is subjected to crosslinking treatment, the resulting crosslinking-treated product is subjected to infusibility impartment treatment, the resulting infusibility impartment-treated product is subjected to pulverization treatment, and the resulting pulverization-treated product is subjected to baking treatment.

Each treatment will now be described.

[Crosslinking treatment]

First, a source material of the non-graphitizable carbon (hereinafter, also referred to as simply a "source material") is subjected to crosslinking treatment to obtain a crosslinking-treated product.

Here, the source material used for the example of the production method is not particularly limited, and known source materials can be used. Examples of the source material include some types of pitch such as coal-based pitch and petroleum-based pitch, resins such as phenol resin and furan resin, mixtures of pitch and resin, and the like, and among them, some types of pitch such as coal-based pitch and petroleum-based pitch are preferable from the viewpoint of economical efficiency, etc.

Examples of the method for subjecting the above-described source material to crosslinking treatment include a method based on air blowing reaction, a dry method with oxidizing gas (air, oxygen, or ozone), a wet method with an aqueous solution of nitric acid, sulfuric acid, hypochlorous acid, a mixed acid, or the like, etc., and among them, a method based on air blowing reaction is preferable.

The air blowing reaction is a reaction in which the above-described source material is heated and an oxidizing gas (for example, air, oxygen, or ozone, or a mixture of them) is blown in to raise the softening point. By using the air blowing reaction, a crosslinking-treated product (for example, air blown pitch) having a high softening point of, for example, 200°C or more can be obtained.

According to JP H09-153359 A, it is known that air blowing reaction is a reaction in a liquid phase state and hardly causes incorporation of oxygen atoms into the carbon material as compared to crosslinking treatment in a solid phase state.

In the air blowing reaction, a reaction mainly based on oxidative dehydration reaction proceeds, and polymerization proceeds by biphenyl-type crosslinking bonding. It is known that, by subsequent infusibility impartment and baking (described later), non-graphitizable carbon having a non-oriented three-dimensional structure in which such crosslinked portions are predominant and retaining a large number of voids for lithium to be occluded in is supposedly obtained.

The conditions for air blowing reaction are not particularly limited, but the reaction temperature is preferably 280 to 420°C and more preferably 320 to 380°C in that excessively high temperatures suppress the occurrence of a mesophase and increase the reaction rate. The amount of oxidizing gas blown in is preferably 0.5 to 15 L/min and more preferably 1.0 to 10 L/min per 1000 g of pitch as compressed air. The reaction pressure may be any of normal pressure, reduced pressure, and increased pressure, and is not particularly limited.

The softening point of a crosslinking-treated product such as air blown pitch obtained by such crosslinking treatment is preferably 200 to 400°C and more preferably 250 to 350°C in terms of ease of infusibility impartment treatment in a subsequent stage.

The obtained crosslinking-treated product may be coarsely pulverized using an atomizer or the like before subjected to infusibility impartment treatment.

[Infusibility impartment treatment]

Next, the crosslinking-treated product such as air blown pitch is subjected to infusibility impartment treatment to obtain an infusibility impartment-treated product (for example, infusibility-imparted pitch). The infusibility impartment treatment is a kind of crosslinking treatment (oxidation treatment) performed in a solid phase state; thereby, oxygen is incorporated into the structure of the crosslinking-treated product, and by further proceeding of crosslinking, melting is hindered at high temperature.

The method of infusibility impartment treatment is not particularly limited; examples include a dry method with an oxidizing gas (air or oxygen), a wet method with an aqueous solution of nitric acid, sulfuric acid, hypochlorous acid, a mixed acid, or the like, and the like, and among them, a dry method with an oxidizing gas is preferable.

As the treatment temperature of infusibility impartment treatment, a temperature not more than the softening point of the crosslinking-treated product is preferably selected. Further, the rate of temperature increase in the case of performing the treatment in a batch system is preferably 5 to 100°C/hour and more preferably 10 to 50°C/hour from the viewpoint of preventing fusion bonding more.

The number of times of infusibility impartment treatment is preferably set to two or more in terms of equalizing the degree of oxidation of the interior of the particle for homogeneity and obtaining stable characteristics of the non-graphitizable carbon.

Specific manners of dividing infusibility impartment treatment into two or more rounds include a method in which the temperature of infusibility impartment treatment is increased stepwise.

For example, there is a method in which the temperature is increased to a first set temperature at the above preferred rate of temperature increase and infusibility impartment treatment is performed at the first set temperature for a predetermined period of time, and then the temperature is increased to a second set temperature at the above preferred rate of temperature increase and infusibility impartment treatment is performed at the second set temperature for a predetermined period of time.

The first set temperature may be set according to the softening point of the crosslinking-treated product as appropriate, and is preferably 100 to 400°C and more preferably 150 to 300°C. The treatment time at the first set temperature is preferably 0.5 to 3 hours and more preferably 0.5 to 2 hours.

The second set temperature may be set according to the softening point of the crosslinking-treated product treated at the first set temperature as appropriate, and is preferably 100 to 450°C and more preferably 150 to 350°C. The treatment time at the second set temperature is preferably 1 to 15 hours and more preferably 2 to 10 hours.

The second set temperature is preferably higher than the first set temperature, and the second set temperature is preferably higher than the first set temperature by 20 to 150°C and more preferably higher than the first set temperature by 30 to 100°C.

Other treatment conditions in the infusibility impartment treatment are not particularly limited, but for example, the amount of oxidizing gas blown in is preferably 1.0 to 20 L/min and more preferably 2.0 to 10 L/min as compressed air per 1000 g. The reaction pressure may be any of normal pressure, reduced pressure, and increased pressure, and is not particularly limited.

The amount of oxygen of the infusibility impartment-treated product obtained by infusibility impartment treatment is preferably 3 to 20 mass% and more preferably 5 to 15 mass% in terms of preventing fusion bonding during baking.

[Pulverization treatment]

Next, the infusibility impartment-treated product such as infusibility-imparted pitch is subjected to pulverization treatment to adjust the particle size. At this time, pulverization is preferably performed such that the average particle size of the infusibility impartment-treated product after pulverization treatment is 1 to 50 μm, and is more preferably performed such that the average particle size is 20 to 35 μm.

The average particle size referred to herein is a particle size ($D_{50}$) at which the cumulative frequency in a laser diffraction particle size distribution meter is 50% in volume percentage.

The pulverizer used for pulverization treatment is not particularly limited, and known methods can be used; examples include a jet mill, a pin mill, a ball mill, a hammer mill, a roller mill, a vibration mill, and the like.

In the case of using these pulverizers, the pulverization conditions are set such that the average particle size of the infusibility impartment-treated product after pulverization treatment falls within the above range.

[Baking treatment]

Next, the infusibility impartment-treated product such as infusibility-imparted pitch subjected to pulverization treatment is fired under reduced pressure or in an inert gas atmosphere such as nitrogen, and thereby a non-graphitizable carbon material is obtained. The ultimate temperature (baking temperature) in baking is preferably 600 to 880°C, more preferably 650 to 850°C, and still more preferably 680 to 820°C. At this time, the rate of temperature increase is preferably 50 to 150°C/hour and more preferably 80 to 120°C/hour.

[Mixed carbon powder]

The non-graphitizable carbon of the present invention may be mixed with graphite and used as a mixed carbon powder.

Thereby, while high discharge capacity is maintained, more excellent cycle characteristics are obtained even when charge/discharge conditions are set to a low temperature and a high rate.

The content amount of the non-graphitizable carbon is, for example, 1 mass% or more with respect to the total mass of the mixed carbon powder, and is preferably 2 mass% or more because more excellent cycle characteristics are obtained.

On the other hand, the content amount of the non-graphitizable carbon is, for example, 20 mass% or less with respect to the total mass of the mixed carbon powder, and is preferably 15 mass% or less because a higher average operating voltage is obtained.

The content amount of graphite in the mixed carbon powder is preferably a balance of the non-graphitizable carbon. Specifically, the content amount of graphite is preferably 80 to 99 mass% and more preferably 85 to 98 mass% with respect to the total mass of the mixed carbon powder.

The graphite contained in the mixed carbon powder is not particularly limited, and may be natural graphite or artificial graphite. The graphite contained in the mixed carbon powder may include natural graphite and artificial graphite. The source material for producing artificial graphite is not particularly limited, and examples include petroleum-based coke, coal-based coke, and the like.

The lattice plane distance $d_{002}$ of the graphite is preferably 0.359 nm or less, more preferably 0.350 nm or less, and most preferably 0.340 nm or less.

[Lithium-ion secondary battery]

A lithium-ion secondary battery using the non-graphitizable carbon of the present invention for a negative electrode for a lithium-ion secondary battery (hereinafter, also referred to as a "lithium-ion secondary battery of the present invention") will now be described.

The lithium-ion secondary battery usually includes a negative electrode, a positive electrode, and a nonaqueous electrolytic solution as main battery components. The positive electrode and the negative electrode are each formed of a substance (for example, a layered compound), a compound, or a cluster capable of occluding Li, and lithium ions are occluded into and released from the positive electrode and the negative electrode in charge/discharge processes. More specifically, this is a battery mechanism in which Li is doped into the negative electrode during charge and Li is dedoped from the negative electrode during discharge.

The lithium-ion secondary battery of the present invention is not particularly limited except that the non-graphitizable carbon of the present invention is used as a negative electrode material, and for other battery components, elements of common lithium-ion secondary batteries may be used correspondingly.

Although in the following a case where the non-graphitizable carbon of the present invention is used for a negative electrode of a lithium-ion secondary battery is described, the configuration in the case of using the mixed carbon powder is similar to that in the case of using the non-graphitizable carbon of the present invention.

[Negative electrode]

The negative electrode produced from the non-graphitizable carbon of the present invention is not particularly limited, and can be used as an ordinary negative electrode. The negative electrode can contain a binder together with the non-graphitizable carbon of the present invention. As the binder, a binder having chemical stability and electrochemical stability to the electrolyte is preferably used, and usually it is preferable to set the amount of the binder to about 1 to 20 mass% in the total amount of the negative electrode mixture. As the binder, polyvinylidene fluoride, carboxymethyl cellulose (CMC), styrene-butadiene rubber (SBR), or the like can be used. Further, a carbon material (for example, a graphite material) other than the non-graphitizable carbon of the present invention may be contained as an active material. Also carbon black, carbon fiber, or the like, for example, may be contained as a conductive agent.

The non-graphitizable carbon material of the present invention is mixed with a binder to prepare a paste-like negative electrode mixture coating material, and the negative electrode mixture coating material is usually applied to one surface or both surfaces of a current collector to form a negative electrode mixture layer for use. At this time, an ordinary solvent can be used for the preparation of the negative electrode mixture coating material. The shape of the current collector used for the negative electrode is not particularly limited, and examples include foil shapes, net shapes such as mesh and expanded metal, and the like. Examples of the current collector include copper, stainless steel, nickel, and the like.

[Positive electrode]

As a positive electrode material (positive electrode active material), a material that a sufficient amount of lithium ions can be doped into and dedoped from is preferably selected. Examples of such a positive electrode active material include transition metal oxides, transition metal chalcogenides, and vanadium oxides, and lithium-containing compounds of these, a Chevrel phase compound represented by the general formula $M_xMo_6S_{8-Y}$ (in the formula, X representing a numerical value in the range of $0 \leq X \leq 4$, Y representing a numerical value in the range of $0 \leq Y \leq 1$, and M representing a metal such as a transition metal), lithium iron phosphate, activated carbon, activated carbon fiber, and the like. For the positive electrode active material, one kind may be used singly, or two or more kinds may be used in combination. Also a carbonate such as lithium carbonate may be added into the positive electrode.

The lithium-containing transition metal oxide is a composite oxide of lithium and a transition metal, and may be a solid solution of lithium and two or more transition metals. Specifically, the lithium-containing transition metal oxide is represented by $LiM(1)_{1-P}M(2)_PO_2$ (in the formula, P representing a numerical value in the range of $0 \leq P \leq 1$, and M(1) and M(2) representing at least one transition metal element) or $LiM(1)_{2-Q}M(2)_QO_4$ (in the formula, Q representing a numerical value in the range of $0 \leq Q \leq 1$, and M(1) and M(2) representing at least one transition metal element). Here, examples of the transition metal element represented by M include Co, Ni, Mn, Cr, Ti, V, Fe, Zn, Al, In, Sn, and the like, and Co, Ni, Fe, Mn, Ti, Cr, V, or Al is preferable.

Such a lithium-containing transition metal oxide is obtained by, for example, using oxides or salts of Li and a transition metal as starting materials, mixing these starting materials according to the composition, and performing baking in the temperature range of 600 to 1000°C in an oxygen atmosphere. The starting material is not limited to oxides or salts, and a lithium-containing transition metal oxide can be synthesized also from a hydroxide or the like.

Examples of the method for forming a positive electrode by using such a positive electrode material include a method in which a paste-like positive electrode mixture coating material composed of a positive electrode material, a binder, and a conductive agent is applied to one surface or both surfaces of a current collector to form a positive electrode mixture layer. As the binder, those given as examples for the negative electrode can be used. As the conductive agent, for example, a fine particulate carbon material, a fibrous carbon material, graphite, carbon black, or VGCF (vapor grown carbon fiber) can be used. The shape of the current collector is not particularly limited, and a current collector having a similar shape to the negative electrode is used. As a material of the current collector, aluminum, nickel, stainless steel foil, or the like can be usually used.

In forming the above-described negative electrode and positive electrode, various additives such as known conductive agents and binders can be used as appropriate.

[Electrolyte]

The electrolyte is not particularly limited as long as lithium ions can move, and may be a liquid nonaqueous electrolytic solution, a polymer electrolyte such as a gel electrolyte, or a solid electrolyte such as an oxide or a sulfide.

Examples of the liquid nonaqueous electrolytic solution include an ordinary nonaqueous electrolyte containing a lithium salt such as $LiPF_6$ or $LiBF_4$ as an electrolyte salt.

In the case of using a liquid nonaqueous electrolyte solution, an aprotic organic solvent such as ethylene carbonate, propylene carbonate, or dimethyl carbonate can be used as a nonaqueous solvent.

In the case of a polymer electrolyte, the polymer electrolyte contains a matrix polymer that is prepared in a gel form with a plasticizer (nonaqueous electrolytic solution). As the matrix polymer, an ether-based polymer such as polyethylene oxide or a crosslinked product thereof, a polymethacrylate-based polymer, a polyacrylate-based polymer, a fluorine-based polymer such as polyvinylidene fluoride or a vinylidene fluoride-hexafluoropropylene copolymer, or the like can be used singly or in mixture, and among them, a fluorine-based polymer is preferable from the viewpoint of oxidation-reduction stability, etc.

As an electrolyte salt and a nonaqueous solvent contained in the plasticizer (nonaqueous electrolytic solution) contained in the polymer electrolyte, those that can be used for a liquid electrolytic solution can be used.

In the lithium-ion secondary battery of the present invention, a separator such as a microporous body of polypropylene or polyethylene or a layer structure of such microporous bodies, or nonwoven fabric is usually used.

Also a gel electrolyte can be used. In this case, for example, a negative electrode containing the non-graphitizable carbon of the present invention, a gel electrolyte, and a positive electrode are stacked in this order, and are housed in a battery exterior material.

The structure of the lithium-ion secondary battery of the present invention is arbitrary, and the shape and form thereof are not particularly limited. The shape of the lithium-ion secondary battery can be freely selected from, for example, a cylindrical type, a square type, a sheet type, and a coin type.

EXAMPLES

The present invention will now be described in more detail based on Examples.

The materials, amounts used, proportions, processing contents, processing procedures, etc. shown in the following Examples can be changed without departing from the gist of the present invention, as appropriate. Thus, the scope of the present invention should not be construed as limited by the Examples shown below.

[Production of a carbon material]

Carbon materials used for Examples and Comparative Examples were produced by the following procedures.

[Example 1]

1000 g of coal-based QI (insoluble impurities)-less pitch (QI: 0.1 to 0.5 mass%, the softening point: 82.5°C) was put into an autoclave equipped with an anchor type stirring apparatus, and heating was performed to 350°C in a nitrogen stream.

Subsequently, compressed air was blown into the pitch while being circulated at 5 L/min, and heating was performed at 320°C for 2 hours to perform crosslinking treatment by air blowing reaction. After that, cooling was performed to room temperature, and the contents (air blown pitch) were taken out.

Next, the taken-out air blown pitch was coarsely pulverized with an atomizer and was then put into a rotary furnace, the temperature was increased at 20°C/hour while compressed air was circulated at 5 L/min, and holding was performed at 200°C for 1 hour. Subsequently, the temperature was increased again to 250°C and kept for 5 hours to perform infusibility impartment treatment, and thereby infusibility-imparted pitch was obtained.

The obtained infusibility-imparted pitch was subjected to pulverization treatment by using a jet mill (FS-4, manufactured by Seishin Enterprise Co., Ltd.) under such conditions that the average particle size of the pulverized product would be 3 to 5 $\mu$m. 100 g of the infusibility-imparted pitch subjected to pulverization treatment was put into a graphite lidded container, the temperature was increased to a baking temperature of 700°C at a rate of temperature increase of 100°C/hour in a nitrogen stream, and baking was performed at 700°C for 2 hours; thus, a carbon powder (non-graphitizable carbon) was obtained.

[Examples 2 and 3]

In Examples 2 and 3, a carbon powder (non-graphitizable carbon) was obtained in a similar manner to Example 1 except that the baking temperature was changed to the temperature of Table 1 shown later.

[Comparative Example 1]

1000 g of coal-based QI-less pitch (QI: 0.1 to 0.5 mass%, the softening point: 82.5°C) was put into an autoclave equipped with an anchor type stirring apparatus, and heating was performed to 320°C in a nitrogen stream. Subsequently, compressed air was blown into the pitch while being circulated at 2 L/min, and heating was performed at 320°C for 2 hours to perform crosslinking treatment by air blowing reaction. After that, cooling was performed to room temperature, and the contents (air blown pitch) were taken out.

Next, the taken-out air blown pitch was coarsely pulverized with an atomizer and was then put into a rotary furnace, the temperature was increased at 20°C/hour while compressed air was circulated at 2 L/min, and then holding was performed at 200°C for 1 hour. Subsequently, the temperature was increased again to 250°C and kept for 3 hours to perform infusibility impartment treatment, and thereby infusibility-imparted pitch was obtained.

100 g of the obtained infusibility-imparted pitch was put into a graphite lidded container, the temperature was increased to 900°C at a rate of temperature increase of 100°C/hour in a nitrogen stream, baking was performed at 900°C for 2 hours, and then pulverization treatment was performed under the same conditions as in the pulverization treatment of Example 1; thus, a carbon powder was obtained.

[Comparative Example 2]

A carbon powder was obtained by using the same conditions as in Comparative Example 1 except that the baking temperature was set to 1100°C and ethylene bottom oil was used as a source material.

[Comparative Example 3]

A carbon powder was obtained by using the same conditions as in Comparative Example 1 except that the baking temperature was set to 1100°C and infusibility impartment treatment was not performed.

[Comparative Examples 4 and 5]

Carbon powders were obtained by using the same conditions as in Comparative Example 1 except that the baking temperature was set to 1200°C and 1600°C, respectively.

[Comparative Example 6]

A carbide of mesocarbon microbeads obtained by baking mesophase microbeads at 500°C was subjected to pulverization treatment with a jet mill to change the average particle size ($D_{50}$) to 3 $\mu$m, and then graphitization treatment was performed at 3000°C; thus, a carbon powder was obtained.

[Measurement and evaluation]

[Measurement by X-ray diffraction]

For the carbon material obtained in each of the Examples and the Comparative Examples, an X-ray diffraction pattern was obtained by the above-described method, and the above-described analysis was performed to obtain the strain $\varepsilon$ and the lattice plane distance d002.

[Measurement of discharge capacity]

According to the following procedure, the carbon material obtained in each of the Examples and the Comparative Examples was used as a negative electrode material to fabricate a coin-type secondary battery for evaluation (see FIG. 1), and the discharge capacity was evaluated.

(Preparation of a negative electrode mixture paste)

First, the obtained carbon powder was used as a negative electrode material to prepare a negative electrode mixture paste. Specifically, the carbon powder (95 parts by mass) and a 12% N-methylpyrrolidinone solution of polyvinylidene difluoride (PVDF) (5 parts by mass in terms of solid content) were put into a planetary mixer, stirring was performed at 100 rpm for 15 minutes, N-methylpyrrolidinone was further added to adjust the solid content ratio to 60%, and subsequently stirring was performed for 15 minutes; thus, a negative electrode mixture paste was prepared.

(Fabrication of a negative electrode)

The prepared negative electrode mixture paste was applied onto copper foil to have a uniform thickness, and the workpiece was put into a blower dryer to volatilize the solvent at 100°C; thus, a negative electrode mixture layer was formed. Next, the negative electrode mixture layer was pressed by roller pressing, and was punched into a circular shape having a diameter of 15.5 mm; thus, a negative electrode including a negative electrode mixture layer stuck to a current collector made of copper foil was fabricated. Before the evaluation, drying at 100°C for 8 hours or more in a vacuum was performed.

(Preparation of an electrolytic solution)

$LiPF_6$ was dissolved at a concentration of 1 mol/dm$^3$ in a mixed solvent obtained by mixing ethylene carbonate (33 vol%) and methyl ethyl carbonate (67 vol%), and thus a nonaqueous electrolytic solution was prepared.

(Fabrication of an evaluation battery)

Next, the fabricated negative electrode was used to fabricate a coin-type secondary battery for evaluation shown in FIG. 1 (also referred to as simply an "evaluation battery"). FIG. 1 is a cross-sectional view showing a coin-type secondary battery for evaluation.
First, lithium metal foil was pressed against a nickel net, and the workpiece was punched into a circular shape having a diameter of 15.5 mm; thereby, a disk-shaped counter electrode 4 made of lithium foil and stuck to a current collector 7a made of a nickel net was fabricated.
Next, a separator 5 impregnated with the electrolyte solution was placed between the working electrode (negative electrode) 2 stuck to a current collector 7b and the counter electrode 4 stuck to the current collector 7a and stacking was performed, then the working electrode 2 was housed in an exterior cup 1 and the counter electrode 4 was housed in an exterior can 3, the exterior cup 1 and the exterior can 3 were combined, peripheral portions of the exterior cup 1 and the exterior can 3 were crimped via an insulating gasket 6, and sealing was performed; thereby, an evaluation battery was fabricated.
In the fabricated evaluation battery, peripheral portions of the exterior cup 1 and the exterior can 3 are crimped via the insulating gasket 6, and thus a sealed structure is formed. In the interior of the sealed structure, as shown in FIG. 1, the current collector 7a, the counter electrode 4, the separator 5, the working electrode (negative electrode) 2, and the current collector 7b are stacked in this order from the inner surface of the exterior can 3 toward the inner surface of the exterior cup 1.

(Charge/discharge test)

The fabricated evaluation battery was subjected to the following charge/discharge test under a condition of 25°C. In this test, the process of doping lithium ions into the carbon powder was referred to as "charge", and the process of dedoping lithium ions from the carbon powder was referred to as "discharge".
First, constant current charge was performed at a current value of 0.39 mA until the circuit voltage reached 0 mV, switching to constant voltage charge was performed at the time point when the circuit voltage reached 0 mV, and charge was continued until the current value reached 20 $\mu$A. The charge capacity (unit: mAh/g) of the first time was determined from the amount of current passed during this time. After that, the test was suspended for 120 minutes. Next, constant current discharge was performed at a current value of 0.39 mA until the circuit voltage reached 1.5 V, switching to constant voltage discharge was performed at the time point when the circuit voltage reached 1.5 V, and discharge was continued until the current value reached 20 $\mu$A. The discharge capacity (unit: mAh/g) of the first time was determined from the amount of current passed during this time.

[Results]

The pieces of measurement and the evaluation results of the Examples and the Comparative Examples are shown in Table 1.

[Table 1]

| Table 1 | Source material | Baking temperature [°C] | Lattice plane distance d002 [nm] | Strain $\varepsilon$ - | Discharge capacity [mAh/g] |
|---|---|---|---|---|---|
| Example 1 | Coal-based pitch | 700 | 0.364 | 0.113 | 704 |
| Example 2 | Coal-based pitch | 800 | 0.362 | 0.090 | 484 |
| Example 3 | Coal-based pitch | 850 | 0.363 | 0.086 | 469 |
| Comparative Example 1 | Coal-based pitch | 900 | 0.363 | 0.080 | 434 |
| Comparative Example 2 | Ethylene bottom oil | 1100 | 0.372 | 0.060 | 380 |
| Comparative Example 3 | Coal-based pitch | 1100 | 0.351 | 0.032 | 291 |
| Comparative Example 4 | Coal-based pitch | 1200 | 0.363 | 0.065 | 332 |
| Comparative Example 5 | Coal-based pitch | 1600 | 0.356 | 0.084 | 167 |

(continued)

| Table 1 | Source material | Baking temperature [°C] | Lattice plane distance d002 [nm] | Strain ε - | Discharge capacity [mAh/g] |
|---|---|---|---|---|---|
| Comparative Example 6 | Mesophase microbeads | 3000 | 0.340 | 0.000 | 317 |

From the results of Table 1, it has been found that the Examples, in which the strain ε is in a predetermined range and the lattice plane distance d002 is in a predetermined range, have obtained higher discharge capacities than the Comparative Examples, in which one or more of the strain ε and the lattice plane distance d002 are not in the respective predetermined ranges.

[Evaluation of the mixed carbon powder]

Evaluation was performed when a mixed carbon powder in which the carbon powder (non-graphitizable carbon) and graphite were mixed was used as a carbon material for a negative electrode.
Carbon materials (mixed carbon powders) used for Examples were produced by the procedures shown below.

[Examples 4 to 8]

A mixed carbon powder in which the carbon powder (non-graphitizable carbon) obtained in Example 3 above and needle coke-based graphite (the lattice plane distance d002 being 0.336 nm) having an average particle size of 10 $\mu$m were mixed at the mixing ratio shown in Table 2 shown later was obtained.

[Measurement and evaluation]

[Charge/discharge test]

According to the following procedure, the mixed carbon powder obtained in each of the Examples was used as a negative electrode material to fabricate a secondary battery for evaluation, and a charge/discharge test was performed.

(Negative electrode and electrolytic solution)

A negative electrode mixture was obtained in a similar manner to the above procedure, and a negative electrode and an electrolytic solution were prepared. The negative electrode was punched into a size of 32 mm × 52 mm and molded.

(Positive electrode)

A layered rock-salt structured lithium-cobalt composite oxide of the chemical formula $LiNi_{0.3}Co_{0.3}Mn_{0.3}O_3$ was used as a positive electrode active material. 90 parts by mass of the composite oxide was mixed with 5 parts by mass of acetylene black as a conductive agent and 5 parts by mass of PVDF as a binder, an appropriate amount of N-methyl-2-pyrrolidone was added, and kneading was sufficiently performed to obtain a positive electrode paste.
A doctor blade was used to apply the positive electrode paste to one surface of an aluminum foil current collector having a thickness of 50 $\mu$m, drying was performed, and then compression was performed by pressing to form a 50-$\mu$m positive electrode active material layer on the aluminum foil current collector. The current collector on which the positive electrode active material was formed was punched into a rectangle of 30 mm × 50 mm.

(Fabrication of an evaluation battery)

The positive electrode and the negative electrode obtained by the above procedure were made to face each other across a separator, the workpiece was inserted into an Al laminate, the electrolytic solution was injected, and then vacuum sealing was performed to fabricate a battery for evaluation.

(Charge/discharge test)

The fabricated evaluation battery was subjected to the following charge/discharge test. In this test, the process of doping lithium ions into the carbon powder was referred to as "charge", and the process of dedoping lithium ions from the carbon powder was referred to as "discharge".

First, at 25°C, CC (constant current) charge was performed up to 3.6 V at a charge rate of 0.05 C, and CCCV (constant current-constant voltage) charge was performed up to 4.2 V at 0.2 C. The lower limit value of the current was set to 0.05 C. Next, CC discharge was performed up to 2.7 V at a discharge rate of 0.2 C at 25°C. The average value of the voltage during discharge under the above discharge conditions was taken as the average voltage.

Subsequently, the charge/discharge conditions were changed to 7 conditions in the following order, and charge and discharge were repeated for 10 cycles under each condition. All the cycles of charge and discharge were performed in the CC mode; charge was performed until the voltage reached 4.2 V, and discharge was performed until the voltage reached 2.7 V.

Condition 1: 25°C, the charge/discharge rate: 0.20 C
Condition 2: 25°C, the charge/discharge rate: 0.50 C
Condition 3: 25°C, the charge/discharge rate: 1.00 C
Condition 4: 10°C, the charge/discharge rate: 0.75 C
Condition 5: 10°C, the charge/discharge rate: 1.00 C
Condition 6: 0°C, the charge/discharge rate: 0.50 C
Condition 7: 0°C, the charge/discharge rate: 0.75 C

The coulombic efficiency and the capacity retention rate were determined under each condition, and the cycle characteristics under each condition were evaluated based on the coulombic efficiency and the capacity retention rate. The results are shown in Table 2 shown later.

A: The coulombic efficiency at the second cycle is 99% or more, and the capacity retention rate is 94% or more.
B: The requirements of A are not satisfied

The coulombic efficiency is a value (unit: %) determined by (the discharge capacity at the second cycle/the charge capacity at the second cycle) × 100, and the capacity retention rate is a value (unit: %) determined by (the discharge capacity at the second cycle/the discharge capacity at the tenth cycle) × 100.

[Results]

The evaluation results in the case where the mixed carbon powders were used are shown in Table 2.

[Table 2]

| Table 2 | Type of non-graphitizable carbon | Mixing ratio of non-graphitizable carbon | Mixing ratio of needle coke-based graphite | 25°C | | | 10°C | | 0°C | | Average voltage |
|---|---|---|---|---|---|---|---|---|---|---|---|
| | | [mass%] | [mass%] | 0.2C | 0.5C | 1C | 0.75C | 1C | 0.5C | 0.75C | [V] |
| Example 4 | Carbon powder of Example 3 | 3 | 97 | A | A | A | A | B | A | B | 3.699 |
| Example 5 | Carbon powder of Example 3 | 5 | 95 | A | A | A | A | B | A | B | 3.697 |
| Example 6 | Carbon powder of Example 3 | 12 | 88 | A | A | A | A | A | A | A | 3.687 |
| Example 7 | Carbon powder of Example 3 | 1 | 99 | A | A | B | B | B | A | B | 3.702 |

(continued)

| Table 2 | Type of non-graphitizable carbon | Mixing ratio of non-graphitizable carbon | Mixing ratio of needle coke-based graphite | 25°C | | | 10°C | | 0°C | | Average voltage |
|---|---|---|---|---|---|---|---|---|---|---|---|
| | | [mass%] | [mass%] | 0.2C | 0.5C | 1C | 0.75C | 1C | 0.5C | 0.75C | [V] |
| Example 8 | Carbon powder of Example 3 | 17 | 83 | A | A | A | A | A | A | A | 3.678 |

As shown in Table 2, when Examples 4 to 8, which used the carbon powder (non-graphitizable carbon) of Example 3, are compared, it has been found that Examples 4 to 6 and 8, in which the content amount of the non-graphitizable carbon was 2 mass% or more, exhibited better cycle characteristics than Example 7, in which the content amount of the non-graphitizable carbon was 1 mass%.

Further, Examples 4 to 7, in which the content amount of the non-graphitizable carbon was 15 mass% or less, obtained higher average voltages than Example 8, in which the content amount of the non-graphitizable carbon was 17 mass%.

INDUSTRIAL APPLICABILITY

Non-graphitizable carbon of the present invention is suitable as a negative electrode material of a lithium-ion secondary battery, and can be expected to be used in various industrial fields.

[REFERENCE SIGNS LIST]

1 exterior cup
2 working electrode
3 exterior can
4 counter electrode
5 separator
6 insulating gasket
7a current collector
7b current collector

**Claims**

1. Non-graphitizable carbon

   wherein a strain ε determined by a method in which an X-ray diffraction pattern is subjected to Rietveld analysis to obtain a profile and the profile is used to determine a strain ε by a Williamson-Hall method is 0.081 to 0.120, and a lattice plane distance d002 corresponding to 002 reflection as obtained by subjecting the X-ray diffraction pattern to Rietveld analysis is 0.360 to 0.370 nm.

2. A negative electrode for a lithium-ion secondary battery, the negative electrode comprising the non-graphitizable carbon according to claim 1.

3. A lithium-ion secondary battery comprising the negative electrode for a lithium-ion secondary battery according to claim 2.

4. A mixed carbon powder comprising the non-graphitizable carbon according to claim 1 and graphite,

   wherein a content amount of the non-graphitizable carbon is 1 to 20 mass% with respect to a total mass of the mixed carbon powder, and
a balance is the graphite.

5. A negative electrode for a lithium-ion secondary battery, the negative electrode comprising the mixed carbon powder according to claim 4.

6. A lithium-ion secondary battery comprising the negative electrode for a lithium-ion secondary battery according to claim 5.

**Patentansprüche**

1. Nicht graphitisierbarer Kohlenstoff

   wobei eine Dehnung ε, die durch ein Verfahren bestimmt wird, bei welchem ein Röntgenbeugungsmuster einer Rietveld-Analyse unterzogen wird, um ein Profil zu erhalten, und das Profil verwendet wird, um eine Dehnung ε nach der Williamson-Hall-Methode zu bestimmen, 0,081 bis 0,120 beträgt, und
   ein Gitterebenenabstand d002, welcher der 002-Reflexion entspricht, wie er durch Unterziehen des Röntgenbeugungsmusters einer Rietveld-Analyse erhalten wird, 0,360 bis 0,370 nm beträgt.

2. Negative Elektrode für eine Lithium-Ionen-Sekundärbatterie, wobei die negative Elektrode den nicht graphitisierbaren Kohlenstoff gemäß Anspruch 1 umfasst.

3. Lithium-Ionen-Sekundärbatterie, welche die negative Elektrode für eine Lithium-Ionen-Sekundärbatterie gemäß Anspruch 2 umfasst.

4. Gemischtes Kohlenstoffpulver, das den nicht graphitisierbaren Kohlenstoff gemäß Anspruch 1 und Graphit umfasst,

   wobei ein Gehalt des nicht graphitisierbaren Kohlenstoffs 1 bis 20 Massenprozent, bezogen auf eine Gesamtmasse des gemischten Kohlenstoffpulvers, beträgt und
   der Rest Graphit ist.

5. Negative Elektrode für eine Lithium-Ionen-Sekundärbatterie, wobei die negative Elektrode das gemischte Kohlenstoffpulver gemäß Anspruch 4 umfasst.

6. Lithium-Ionen-Sekundärbatterie, welche die negative Elektrode für eine Lithium-Ionen-Sekundärbatterie gemäß Anspruch 5 umfasst.

**Revendications**

1. Carbone non graphitisant

   dans lequel une contrainte ε déterminée par une méthode dans laquelle un diffractogramme de rayons X est soumis à une analyse de Rietveld afin d'obtenir un profil et le profil est utilisé pour déterminer une contrainte ε par une méthode de Williamson-Hall a une valeur de 0,081 à 0,120, et
   une distance réticulaire d002 correspondant à la réflexion de 002 telle qu'obtenue en soumettant le diffractogramme de rayons X à l'analyse de Rietveld va de 0,360 à 0,370 nm.

2. Électrode négative pour batterie d'accumulateurs à l'ion lithium, l'électrode négative comprenant le carbone non graphitisant selon la revendication 1.

3. Batterie d'accumulateurs à l'ion lithium comprenant l'électrode négative pour batterie à l'ion lithium selon la revendication 2.

4. Poudre de carbone mixte comprenant le carbone non graphitisant selon la revendication 1 et du graphite,

   dans laquelle une teneur du carbone non graphitisant va de 1 à 20 % en masse par rapport à une masse totale de la poudre de carbone mixte, et
le reste est le graphite.

5. Électrode négative pour batterie d'accumulateurs à l'ion lithium, l'électrode négative comprenant la poudre de carbone mixte selon la revendication 4.

6. Batterie d'accumulateurs à l'ion lithium comprenant l'électrode négative pour batterie à l'ion lithium selon la revendication 5.

# FIG. 1

**REFERENCES CITED IN THE DESCRIPTION**

**Patent documents cited in the description**

- JP H08180868 A
- JP H1021915 A
- EP 2808300 A1
- US 2014080004 A1
- JP H09153359 A